# FASCICULE DE BREVET EUROPEEN

(11) **EP 2 986 487 B1**
(45) Date de publication et mention de la délivrance du brevet: **21.12.2016**
(21) Numéro de dépôt: 14718586.2
(22) Date de dépôt: 17.04.2014
(51) Int. Cl.: B62D 21/18, B62D 24/02

(54) **CHÂSSIS POUR KART A RÉSISTANCE ACCRUE AUX CHOCS, ET KART CORRESPONDANT**
CHASSIS FÜR EIN KART MIT VERBESSERTEN STOSSWIDERSTAND, UND ENTSPRECHENDES KART
KART CHASSIS WITH INCREASED IMPACT RESISTANCE AND CORRESPONDING KART

(30) Priorité: 17.04.2013 FR 1353497
(43) Date de publication de la demande: 24.02.2016
(73) Titulaire: SODIKART, 44200 Couëron (FR)
(72) Inventeur: GERGAUD, William, F-44119 Treillieres (FR)
(74) Mandataire: Vidon Brevets & Stratégie
(86) Numéro de dépôt international: PCT/EP2014/057937
(87) Numéro de publication internationale: WO 2014/170451

(56) Documents cités:
- WO-A1-02/21232
- DE-A1-102007 002 676
- DE-U1- 29 618 057
- FR-A1- 2 246 436
- FR-A5- 2 185 996
- JP-A- S61 163 066
- US-A- 2 314 603
- US-A- 3 015 496
- US-A- 3 557 894
- US-A- 4 629 023

## Description

### 1. Domaine de l'invention

Le domaine de l'invention est celui des véhicules de loisir utilisés par exemple sur pistes. Plus précisément, l'invention concerne la structure, et notamment le châssis de tels véhicules, notamment de karts. Le document US 2314603 A1 divulgue un châssis de véhicule tel que présenté dans le préambule de larevendication 1.

Les karts sont des véhicules motorisés exploités sur des pistes fermées, par opposition à des véhicules roulant sur route. Ces pistes sont extérieures (« outdoor ») ou couvertes (« indoor »).

On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres.

Les seconds sont la plupart du temps la propriété de personnes privées, qui les utilisent pour leur loisir, en s'entraînant et en participant à des compétitions.

L'invention s'applique particulièrement aux karts de location, mais également aux karts de compétition et de loisir.

### 2. Art antérieur et ses inconvénients

Sur le plan technique, les karts présentent certaines particularités par rapport à d'autres véhicules. A l'inverse des automobiles de tourisme pour lesquelles on admet, en cas de choc, que l'énergie de déformation entraîne la destruction de la structure, le kart demande que la déformation soit réversible sur la plage la plus élevée possible. Cette condition s'impose, en particulier en location, afin de permettre la poursuite de l'exploitation et d'éviter des changements de pièces fréquents et donc coûteux.

De plus, à des fins de sécurité et de protection du pilote, des organes de protection sont également solidarisés au châssis, qui sont destinés à absorber l'énergie du choc en cas d'impact, à éviter les chevauchements et les de la revendication 1. encastrements avec d'autres karts, ou encore à éviter le contact avec les roues des karts voisins.

Ces différents organes de protection, nécessaires à la sécurité du pilote, transmettent au cadre des efforts élevés, qui peuvent entraîner des ruptures ou des déformations plastiques des tubes formant le châssis, ce qui peut obliger à disposer des renforts locaux à l'introduction des forces.

Ceci contribue à la rigidification du châssis, et nuit donc à sa capacité de vrille.

En effet, les karts n'ayant ni différentiel, ni suspension, la capacité des karts à prendre des courbes dépend fortement de la déformation du châssis qui, si elle est adéquate, permet de lever ou de soulager la roue intérieure arrière et donc d'éviter le sous-virage. Le phénomène de torsion subi par un châssis de kart dans un virage est appelé « vrille ».

En d'autres termes, il est important, pour avoir une conduite agréable, que le châssis soit suffisamment souple.

Cependant, la structure d'un kart classique est telle que de nombreux organes fonctionnels ou accessoires sont solidarisés au châssis, ou cadre, ce qui accroît sa rigidité, et nuit donc à la tenue de route du kart.

Parmi ces organes, on peut citer le module de pédalier, qui comprend classiquement une pédale de frein et une pédale d'accélérateur, un module de direction, un siège, etc.

Il existe donc un besoin d'une telle structure de kart, qui comprenne un châssis plus solide et plus résistant aux chocs que les châssis antérieurs. Il existe notamment un besoin d'un tel châssis de kart qui soit plus résistant aux chocs latéraux subis par le kart.

Il existe aussi un besoin d'une structure de kart, présentant tous les organes fonctionnels et accessoires nécessaires à un bon fonctionnement du kart et à un bon confort du pilote, et préservant la capacité de vrille du châssis.

Il existe également un besoin d'une telle structure de kart qui présente une bonne tenue de route.

### 3. Exposé de l'invention

L'invention répond à ce besoin en proposant un kart comprenant un châssis comprenant une paire de rails tubulaires sensiblement parallèles et s'étendant longitudinalement, reliés l'un à l'autre en chacune de leurs extrémités par au moins un élément tubulaire transverse.

Selon l'invention, un tel châssis de kart comprend, au niveau d'une partie avant dudit kart, au moins deux tubes sensiblement en forme de U évasés en vis-à-vis assemblés en leur partie médiane de façon à former une structure en forme de X insérée entre lesdits rails tabulaires, et au moins deux tubes sensiblement rectilignes disposés de part et d'autre de ladite structure en forme de X, dont une première extrémité est solidarisée à l'un desdits rails tubulaires et dont l'autre extrémité est solidarisée à une zone centrale de ladite structure en forme de X.

Ainsi, l'invention repose sur une approche tout à fait nouvelle et inventive de la conception de la structure d'un châssis de kart.

En effet, le châssis de l'invention présente, en sa partie avant, une forme en X avec évasement qui permet une meilleure reprise d'efforts en diagonale sur le châssis. Ainsi, en cas d'efforts sur les parties latérales du kart (par exemple en cas de choc), cette nouvelle forme de châssis permet de réduire les contraintes mécaniques sur les éléments structuraux et les zones de soudures, et contribue à renforcer la solidité du châssis.

Par rapport à l'art antérieur, l'utilisation de deux tubes en forme de U évasés en vis-à-vis assemblés en leur partie médiane permet de minimiser les zones de soudures ou les moyens de serrage ainsi que leur sollicitation en efforts tranchants, les éléments structuraux et la zone centrale encaissant alors la majorité des efforts en flexion et en compression. Selon l'orientation des chocs, l'évasement de la forme en X peut également impliquer une reprise partielle d'efforts en torsion au niveau de la zone centrale, évitant ainsi une concentration d'efforts en compression en un point central de la zone centrale.

En outre, les types d'efforts sur un châssis de kart étant multiples et selon diverses orientations, le choix d'une section tubulaire pour les éléments structuraux permet une meilleure résistance aux efforts multiaxiaux et au gauchissement par rapport aux sections en U ou rectangulaires.

Selon un aspect particulier de l'invention, le kart comprend un module de pédalier comprenant une poutre sur laquelle est montée au moins une pédale. Une telle poutre est solidarisée au châssis, d'une part à l'élément tubulaire transverse reliant les rails tubulaires au niveau de la partie avant du kart, et d'autre part à la zone centrale de la structure en forme de X. Les efforts mécaniques impartis au châssis depuis le module de pédalier via la poutre sont ainsi mieux répartis grâce à la forme en X de la structure du châssis.

Selon un autre aspect particulier de l'invention qui peut être mis en oeuvre indépendamment de la structure particulière en forme de X du châssis décrite ci-avant, ou en combinaison avec celle-ci, la structure d'un tel kart est de type modulaire. Ainsi, une ou plusieurs pièces d'interface formées d'éléments amortissants sont disposées entre le châssis lui-même et les différents organes fonctionnels ou accessoires qui lui sont solidarisés.

En effet, un kart est généralement constitué d'un châssis, ou cadre, sur lequel sont soudés, ou vissés, différents organes fonctionnels ou accessoires, tels que le pédalier, le module de direction, le siège, etc. De tels organes fonctionnels ou accessoires tendent à accroître la rigidité du châssis, ce qui réduit son aptitude au vrille, et nuit donc à la tenue de route du kart.

Notamment, de tels éléments amortissants formant pièces d'interface sont disposés au niveau du ou des points de fixation du pédalier au châssis.

Par exemple, dans le cas d'un pédalier réglable, monté coulissant sur une poutre centrale solidaire du châssis, de tels éléments amortissants peuvent être disposés en chacune des extrémités de la poutre centrale, de part et d'autre de cette dernière, au niveau des quatre points de fixation de la poutre au châssis.

Un kart comprend généralement également un module de direction comprenant au moins un volant et une colonne de direction, un tel module de direction étant solidarisé au châssis en au moins un point de fixation. Selon l'invention, un tel kart comprend également au moins un élément amortissant formant pièce d'interface entre le châssis et le module de direction au niveau dudit au moins un point de fixation.

De même, un tel kart peut comprendre au moins un élément amortissant formant pièce d'interface entre le châssis et un siège au niveau du ou des point(s) de fixation du siège au châssis.

Ainsi, grâce à ces éléments amortissants, on obtient un découplage entre le travail du châssis et le travail des différents organes fonctionnels, ou accessoires. On améliore ainsi la capacité du châssis à vriller, en le libérant des contraintes des accessoires ou organes qui lui sont soudés ou vissés. La tenue de route du kart se trouve donc améliorée.

En outre, on évite le transfert d'efforts du châssis vers les différentes pièces (pédalier, module de direction, siège, etc.) qui lui sont solidarisées.

Selon un aspect particulier de l'invention, de tels éléments amortissants formant pièces d'interface entre le châssis et les différents organes fonctionnels ou accessoires du kart sont des silentblocs (marque déposée).

En effet, de tels silentblocs sont généralement constitués d'un matériau souple, qui permet avantageusement d'absorber les chocs et les vibrations entre les différents organes fonctionnels ou accessoires du kart et le châssis qui les porte. De tels silentblocs peuvent être réalisés en caoutchouc, en matière plastique, ou en tout autre matériau répondant à des critères d'élasticité et d'amortissement des impulsions qu'ils reçoivent.

De tels éléments amortissants peuvent ainsi se présenter sous la forme d'articulations élastiques composées d'un anneau en élastomère, pré-comprimé entre deux armatures cylindriques.

Selon une autre caractéristique de l'invention, le châssis comprend au moins un gousset placé entre deux des éléments et/ou rails tubulaires formant le châssis, de façon à les assembler.

Un tel gousset, constitué d'une pièce de tôle emboutie, vient ainsi tenir les tubes constituant le châssis les uns avec les autres. Contrairement à l'art antérieur, les tubes formant le châssis ne sont donc plus directement soudés les uns avec les autres, mais assemblés par l'intermédiaire d'un gousset. En cas de choc par exemple, ceci permet de ne pas transmettre directement les efforts au tube, et rend l'assemblage plus solide.

Selon un aspect particulier, un tel gousset est soudé à chacun des éléments et/ou rails tubulaires qu'il assemble.

Ainsi, selon l'art antérieur, les tubes étaient soudés directement les uns avec les autres: les zones de soudure étaient donc situées précisément aux zones d'effort, et, en cas de choc, étaient susceptibles de se rompre, au niveau de la jonction entre les tubes. Selon l'invention en revanche, les zones de soudure du gousset à chacun des tubes qu'il assemble sont légèrement déportées par rapport aux zones d'effort situées à la jonction entre les tubes. De telles soudures s'avèrent donc plus solides, et l'assemblage des éléments tubulaires du châssis est donc plus résistant, notamment en cas de choc.

Selon une caractéristique particulière de l'invention, un tel gousset comprend une portion sensiblement semi-cylindrique entourant l'un des éléments tubulaires qu'il assemble et au moins une aile de renfort s'étendant entre ces éléments tubulaires.

Un tel gousset peut ainsi aisément être fabriqué par emboutissage de tôle. L'aile de renfort, par exemple de forme triangulaire, permet de renforcer l'assemblage des tubes. La portion sensiblement semi-cylindrique peut n'entourer le tube que sur la moitié de sa circonférence.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 présente une vue en perspective d'un kart selon l'invention;
- la figure 2 présente une vue éclatée du kart de la figure 1;
- la figure 3 illustre le module de pédalier du kart de la figure 1 et son assemblage au châssis au moyen d'éléments amortissants ;
- la figure 4 présente un exemple de module de direction, et son assemblage au châssis au moyen d'éléments amortissants ;
- la figure 5 présente un exemple de châssis de kart conforme à l'invention, et notamment la forme particulière de sa partie avant ;
- la figure 6 illustre la forme d'un gousset utilisé dans l'assemblage du châssis de la figure 5.

### 5. Description détaillée de modes de réalisation de l'invention

Le principe général de l'invention repose sur une nouvelle structure de châssis de kart permettant d'augmenter la résistance aux chocs, et en particulier aux chocs latéraux. Une telle structure, composée d'éléments tubulaires, présente une forme de X insérée entre des rails longitudinaux, ainsi que des tubes transversaux conduisant à une meilleure répartition des efforts mécaniques et donc une réduction des contraintes sur les tubes et les zones de soudures.

On présente désormais, en relation avec les figures, un exemple de réalisation d'une telle structure de kart.

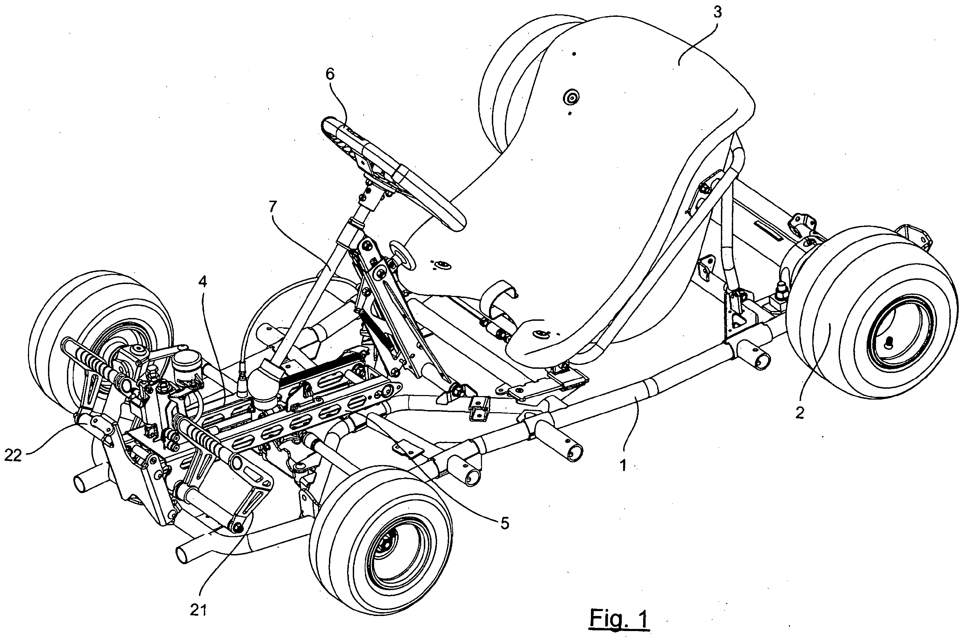

La figure 1 offre une vue en perspective d'un kart selon l'invention. Un tel kart est par exemple un kart de location électrique. Il comprend un châssis, ou cadre, 1, quatre roues 2, un siège 3, dans lequel prend place le pilote. Un pédalier 4 porte une pédale de frein 21 et une pédale d'accélérateur 22. Ce pédalier 4 est monté coulissant sur une poutre centrale 5, qui est solidaire du châssis 1. L'ensemble du pédalier 4 et de la poutre 5 forme un module de pédalier 8. Le kart est dirigé grâce au volant 6, monté sur la colonne de direction 7.

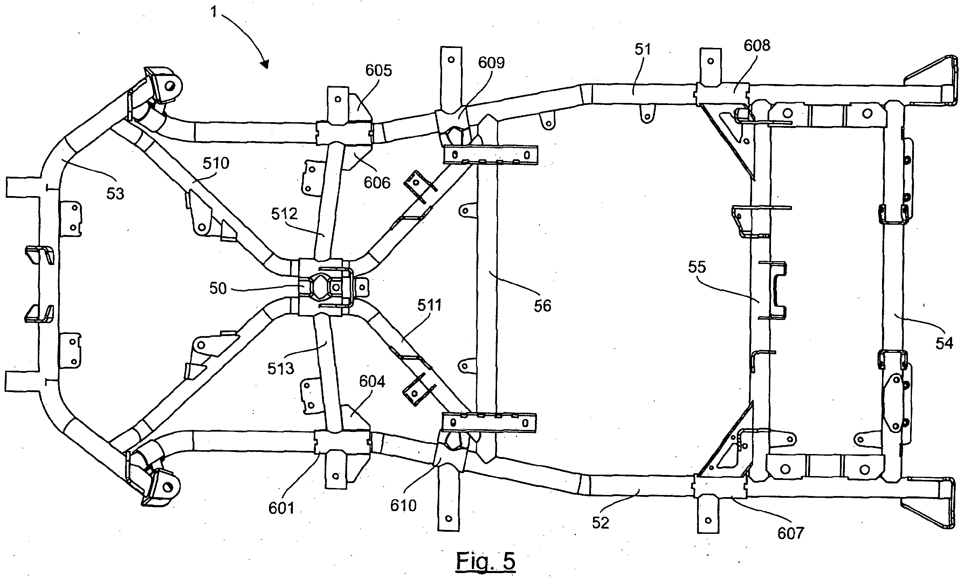

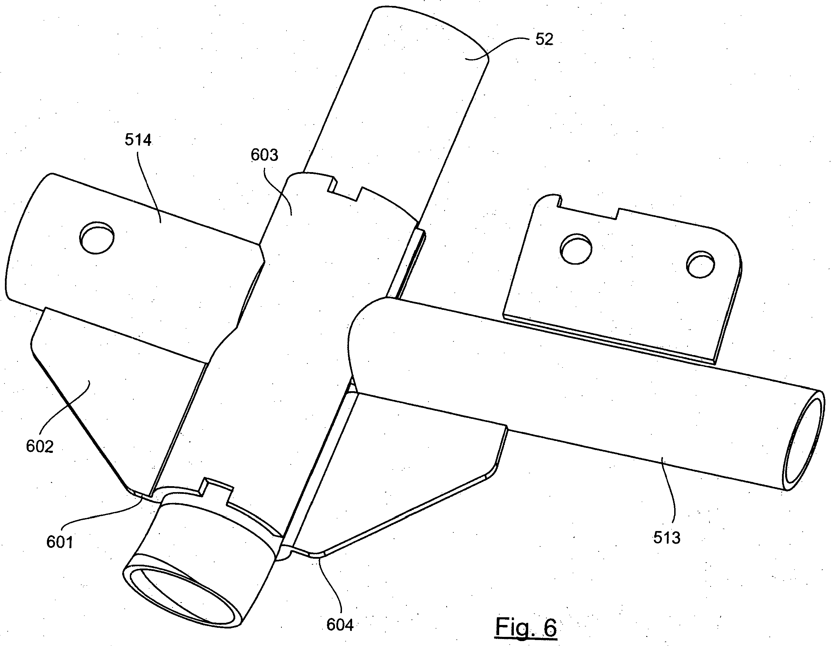

L'invention propose une nouvelle forme de châssis du kart de la figure 1, ainsi qu'un mode d'assemblage particulier de ses différents éléments constituants, qui vont désormais être illustrés en relation avec les figures 5 et 6.

Le châssis 1 de la figure 5 est de préférence tubulaire et réalisé dans un matériau solide et résistant tel que l'acier, par exemple en acier chrome-molybdène. Il comprend une paire de rails tubulaires 51 et 52 sensiblement parallèles et s'étendant longitudinalement, reliés l'un à l'autre en chacune de leurs extrémités par un élément tubulaire transverse : les rails ou longerons 51 et 52 sont ainsi reliés à l'extrémité avant du kart par un tube 53, de forme sensiblement incurvée, et à l'extrémité arrière du kart par un tube rectiligne 54. Le tube 53 situé à l'avant du kart est notamment destiné à porter les éléments de protection frontaux du kart.

L'écartement entre les rails longitudinaux 51 et 52 est légèrement plus important sur la partie arrière du kart, que sur la partie avant.

Dans l'exemple de la figure 5, un deuxième tube transverse rectiligne 55 s'étend entre les rails longitudinaux 51 et 52, à l'arrière du kart, sensiblement parallèle au tube rectiligne 54 situé en son extrémité arrière.

De même, un tube transverse rectiligne médian 56 s'étend entre les deux rails longitudinaux 51 et 52, sensiblement au milieu de ces rails, et donc sensiblement au milieu du châssis 1.

La partie avant du châssis 1, comprise entre le tube transverse avant 53 et le tube transverse médian 56, présente une forme particulière, permettant une meilleure reprise des efforts en diagonale sur le châssis.

En effet, deux tubes référencés 510 et 511, présentant sensiblement une forme de U évasé, sont placés en vis-à-vis et assemblés en leur partie médiane 50 de façon à former une structure en forme de X insérée entre les rails tubulaires longitudinaux 51 et 52.

Plus précisément, une extrémité du tube en U 510, 511 est solidarisée au tube transverse avant 53 ; par son autre extrémité, le tube en U 510, 511 est solidarisé au tube transverse médian 56 et au rail longitudinal 51, 52.

En outre, deux tubes de renfort sensiblement rectilignes 512 et 513 sont disposés de part et d'autre de la structure en forme de X formée par les deux tubes en U 510 et 511. Ainsi, une première extrémité du tube de renfort 512 est solidarisée au rail longitudinal droit 51, et une deuxième extrémité du tube de renfort 512 est solidarisée à la zone centrale 50 de la structure en forme de X. De même, une première extrémité du tube de renfort 513 est solidarisée au rail longitudinal gauche 52, et une deuxième extrémité du tube de renfort 513 est solidarisée à la zone centrale 50 de la structure en forme de X.

Ainsi, les deux tubes en U 510 et 511, associés aux deux tubes de renfort droit 512 et gauche 513, forment une structure de châssis à six branches, qui s'avère plus résistante et plus solide en cas d'effort important (par exemple un choc) sur les parties latérales du kart.

De plus, la solidité du châssis selon l'invention, est encore accrue par un assemblage particulier des différents tubes ou éléments tubulaires, qui peut être mis en oeuvre pour tout type de châssis de kart, y compris pour un châssis ne présentant pas sur sa partie avant la forme particulière de la figure 5.

En effet, selon l'art antérieur, les différents tubes constituant le châssis sont directement soudés les uns avec les autres. Selon l'invention, en revanche, certains tubes du châssis ne sont pas directement soudés les uns avec les autres, mais assemblés au moyen de pièces intermédiaires appelées goussets, représentées en figure 6.

Le gousset 601 est une pièce de tôle emboutie, par exemple en acier, comprenant une portion semi-cylindrique 603, et une aile de renfort 602 de forme sensiblement triangulaire. Dans l'exemple de la figure 6, le gousset 601 est utilisé pour l'assemblage du rail longitudinal 52 et de deux tubes transverses référencés 513 et 514. Le gousset 601 est placé à l'intersection de ces différents tubes, de façon à ce que la portion sensiblement semi-cylindrique 603 coiffe la partie supérieure du rail longitudinal 52 au niveau de la jonction des tubes, et à ce que l'aile de renfort 602 s'étende entre le rail longitudinal 52 et le tube transverse 514.

Un second gousset 604, sensiblement symétrique au premier gousset 601, est positionné de façon à ce que sa portion semi-cylindrique entoure la partie inférieure du rail longitudinal 52 au niveau de la jonction des tubes, et à ce que son aile de renfort s'étende entre le rail longitudinal 52 et le tube de renfort transverse 513.

Chacun de ces deux goussets 601 et 604 est assemblé par soudure au rail longitudinal 52, au tube transverse de renfort 513 et au tube transverse référencé 514. Ainsi, ces soudures ne sont pas positionnées directement sur les zones d'effort situées au niveau de la jonction entre les tubes, mais décalées à proximité, ce qui les rend plus résistantes en cas d'effort important sur un tube, par exemple en cas de choc subi par le kart. La présence de tels goussets permet, en cas d'effort, qu'il ne soit pas directement transmis d'un tube à l'autre, ce qui rend l'assemblage des différents tubes constituant le châssis plus solide.

Les ailes de renfort de ces goussets permettent d'accroître la rigidité de l'assemblage des tubes, et évitent la déformation de la position relative des deux tubes entre lesquelles elles s'étendent, en maintenant leur écartement sensiblement constant.

D'autres goussets référencés 605 à 610 sont également illustrés en figure 5, et permettent l'assemblage de différents tubes constituant le châssis du kart. Leur structure est proche de celle des goussets 601 et 604 de la figure 6, à savoir une portion sensiblement semi-cylindrique et une aile de renfort, cependant, la forme et les dimensions de l'aile de renfort peuvent varier, selon la position relative des tubes à assembler, et les efforts auxquels ils sont soumis. De tels goussets sont également disposés au niveau de la zone centrale 50 de la structure en forme de X de la partie avant du châssis.

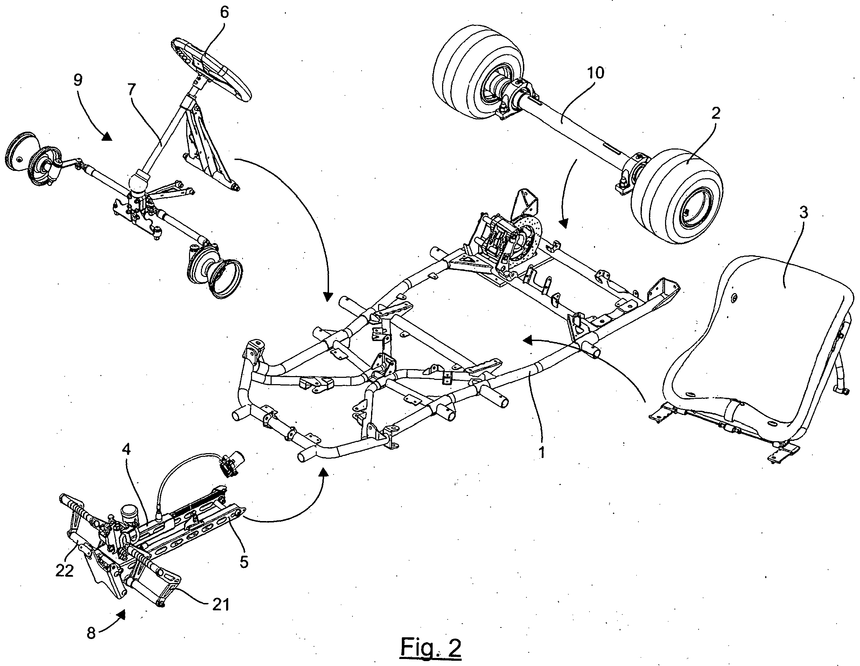

On présente désormais, en relation avec les figures 2 à 4, un autre aspect de l'invention, selon lequel le kart présente une structure modulaire. Cet aspect peut être avantageusement combiné au principe décrit ci-dessus, selon lequel le kart présente en sa partie avant un châssis présentant une structure en forme de X particulière. Il peut également être mis en oeuvre indépendamment de ce principe, dans un kart présentant une autre structure de châssis. Ainsi qu'illustré en figure 2, un tel kart présente donc une structure modulaire, dans laquelle le châssis 1 est assemblé aux différents organes fonctionnels ou accessoires par l'intermédiaire de pièces d'interface, se présentant sous la forme d'éléments amortissants, permettant de découpler le travail du châssis et le travail de ces différents organes assemblés.

Sur la figure 2, de tels organes ou accessoires comprennent :
- le module de pédalier 8 ;
- le module de direction 9 ;
- le siège 3 ;
- le train arrière 10.

Selon l'invention, l'utilisation d'éléments amortissants de type silentblocs dans l'assemblage de ces organes au châssis permet de réduire l'impact de ces organes sur la rigidité du châssis, et donc sur sa capacité de vrille. Le châssis garde ainsi toute liberté de déformation.

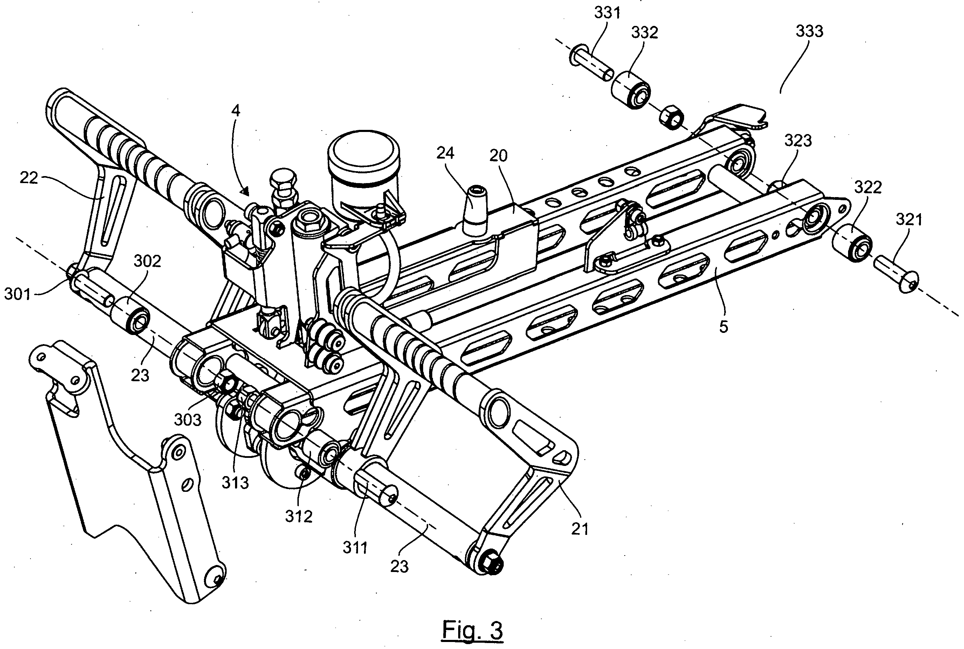

Selon un mode de réalisation de l'invention illustré en figure 3, de telles pièces d'interface sont disposées entre le châssis 1 et le module de pédalier 8.

Dans l'exemple particulier de la figure 3, le module de pédalier 8 comprend un pédalier 4, constitué d'une base 20, qui coulisse sur une poutre centrale 5. La base 20 du pédalier sert également de support à deux cale-pieds 23 destinés à soutenir les talons du pilote. Chaque pédale 21, 22 comprend donc un cale-pied 23 et une barre, ou portion, supérieure sur laquelle appuie l'extrémité avant du pied du pilote. En fonctionnement, la barre supérieure de la pédale pivote autour de l'axe du cale-pied 23. D'autres formes de pédales, par exemple pleines, ou avec une portion supérieure plane, sont bien sûr possibles.

Un ensemble de perforations est pratiqué dans la partie supérieure de la poutre 5, qui définissent autant de positions discrètes du pédalier par rapport au siège. Le pédalier est verrouillé dans l'une de ces positions au moyen d'un pion 24, qui s'engage dans l'une des perforations de la poutre.

Ceci n'est bien sûr qu'un exemple de module de pédalier, et tout autre type de pédalier peut également être mis en oeuvre dans le cadre de l'invention, et notamment un pédalier qui ne serait pas réglable par exemple.

La poutre centrale 5 est solidarisée au châssis 1 en quatre points de fixation par un système vis-écrou. Ces quatre points de fixation sont situés de part et d'autre de la poutre, deux points de fixation étant situés à l'extrémité avant de la poutre 5, et deux points de fixation étant situés à l'extrémité arrière de cette dernière.

Ainsi, à l'extrémité avant de la poutre 5, deux vis 301 et 311 coopèrent avec deux écrous 303 et 313 pour solidariser la poutre 5 et le châssis 1 (non représenté). Conformément à l'invention, deux éléments amortissants 302 et 312 de type silentblocs, réalisés par exemple en caoutchouc ou en matériau élastomère, sont insérés respectivement entre les vis 301, 311 et les écrous 303, 313.

De même, sur la partie arrière de la poutre 5, deux vis 321 et 331 coopèrent avec deux écrous 323 et 333 pour solidariser la poutre 5 et le châssis 1 (non représenté). Conformément à l'invention, deux éléments amortissants 322 et 332 de type silentblocs, réalisés par exemple en caoutchouc ou en matériau élastomère, sont insérés respectivement entre les vis 321, 331 et les écrous 323, 333.

D'autres modes de fixation de la poutre 5 au châssis 1 peuvent bien sûr être envisagés, dès lors que des pièces d'interface 302, 312, 322, 332 sont insérées entre le châssis et la poutre au cours de l'assemblage, afin de découpler le travail du châssis et le travail du module de pédalier, et éviter le transfert d'efforts du châssis vers le module de pédalier.

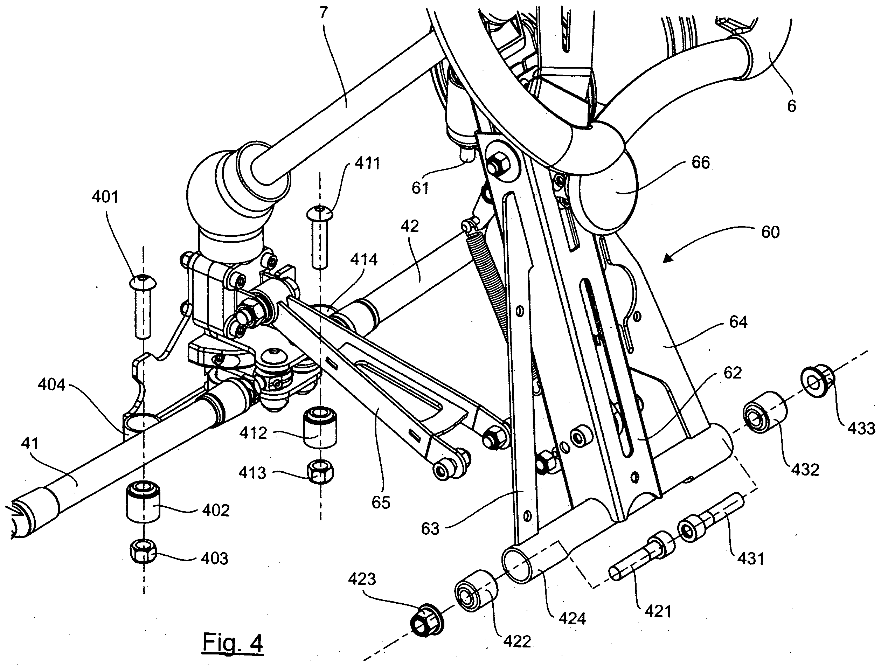

Selon un mode de réalisation de l'invention illustré en figure 4, de telles pièces d'interface sont disposées entre le châssis 1 et le module de direction 9. Le mode de réalisation de la figure 4 peut bien sûr être combiné avec le mode de réalisation de la figure 3, de façon à ce que des silentblocs soient disposés entre le châssis d'une part, et le module de direction et le module de pédalier d'autre part. Alternativement, on peut envisager de mettre en oeuvre le mode de réalisation de la figure 4, sans mettre en oeuvre celui de la figure 3.

La figure 4 illustre un exemple de module de direction 9 susceptible d'être solidarisé au châssis 1 dans le cadre de l'invention. Ainsi que décrit par la suite, un tel module de direction permet un réglage de la hauteur de la colonne de direction 7. Tout autre type de module de direction peut également être utilisé dans le cadre de l'invention, et notamment un module de direction qui ne serait pas réglable.

Un tel module de direction 9 comprend un volant 6, en extrémité d'un axe de direction 7, également appelé colonne de direction. La colonne de direction 7 transmet le mouvement de rotation du volant 6 aux roues par l'intermédiaire de biellettes 41, 42.

Dans cet exemple, la colonne de direction 7 est reliée au châssis 1 (non représenté) par l'intermédiaire d'une bielle 60 de longueur variable. Cette bielle comprend un coulisseau 61 solidarisé à la colonne de direction 7 par une liaison pivot, et une glissière, ou mât, 62 solidarisée au châssis 1 par une liaison pivot.

Des renforts latéraux 63, 64 peuvent être disposés de part et d'autre de la glissière 62, de façon à former une structure en triangle, et sont également montés pivotant par rapport au châssis 1.

Une pièce anti-couple 65, de forme sensiblement triangulaire, peut être disposée entre la base de la colonne de direction 7 et le pied du mât 62, afin d'étayer la colonne de direction et d'éviter tout basculement avant-arrière de cette dernière.

Dans cet exemple, il est possible de régler la hauteur de la colonne de direction 7, et donc du volant 6, par simple coulissement du coulisseau 61 dans la glissière 62, au moyen du bouton de commande 66 permettant de verrouiller ou déverrouiller le coulissement du coulisseau 61 dans la glissière 62. Le mode de fonctionnement détaillé de ce mécanisme ne sera pas décrit ici plus en détail.

Un tel module de direction 9 est solidarisé au châssis 1 (non représenté) par assemblage par vis et écrous. Quatre points de solidarisation du module de direction au châssis sont prévus, à savoir deux points de fixation situés sur la partie avant du module de direction, sensiblement à la base de la colonne de direction 7, de part et d'autre de cette dernière, et deux points de fixation situés au pied de la glissière 62 et des renforts latéraux 63 et 64.

Ainsi, à la partie avant du module de direction 9, deux vis 401 et 411 s'insèrent dans deux logements 404, 414 ménagés dans le module de direction, de part et d'autre de la colonne de direction 7, et coopèrent avec deux écrous 403 et 413, une portion de châssis 1 (non représentée) étant ainsi bloquée entre l'écrou 403, 413 et la vis 401, 411 en position de serrage. Selon l'invention, on insère également entre l'écrou 403, 413 et la vis 401, 411, un élément amortissant de type silentbloc 402, 412, réalisé dans un matériau aux propriétés élastiques. De tels silentblocs 402, 412 s'insèrent par exemple dans les logements 404, 414 ménagés dans le module de direction 9.

De même, sensiblement au pied de la glissière 62, deux vis 421 et 431 viennent se loger dans le tube 424 sur lequel sont fixés les renforts latéraux 63 et 64. Ces deux vis 421 et 431 coopèrent avec des écrous 423 et 433. Des pattes de fixation ménagées sur le châssis 1 (non représentées) sont bloquées entre les vis 421, 431 et les écrous 423, 433 en position de serrage, de façon à solidariser la partie arrière du module de direction 9 au châssis 1. Selon l'invention, on interface également, entre les écrous 423, 433 et les vis 421, 431, des éléments amortissants 422, 432 de type silentblocs, de façon à découpler le travail du châssis et le travail du module de direction. Ces silentblocs 422, 432 peuvent se loger dans le tube 424.

D'autres principes de fixation du module de direction au châssis peuvent également être envisagés sans sortir du cadre de l'invention, dès lors que des pièces d'interface de type éléments amortissants sont insérés entre le châssis et le module de direction, dans ce mode de réalisation.

Les exemples des figures 3 et 4 illustrent le principe de l'invention selon lequel on libère le châssis des contraintes imposées par les différents organes qui lui sont solidarisés, de façon à conserver sa capacité de vrille, en concevant une structure de kart modulaire, par insertion d'éléments amortissants au niveau des points de solidarisation de ces organes au châssis. Bien que ce principe n'ait été illustré que pour le module de pédalier (figure 3) et pour le module de direction (figure 4), il peut également être mis en oeuvre pour la fixation d'autre éléments au châssis, et notamment par exemple pour le siège.

## Revendications

1. Kart comprenant un châssis comprenant une paire de rails tubulaires (51) sensiblement parallèles et s'étendant longitudinalement, reliés l'un à l'autre en chacune de leurs extrémités par au moins un élément tubulaire transverse,
**caractérisé en ce que** ledit châssis comprend, au niveau d'une partie avant dudit kart, au moins deux tubes sensiblement en forme de U évasés en vis-à-vis (301,321,401,421) assemblés en leur partie médiane de façon à former une structure en forme de X insérée entre lesdits rails tubulaires, et au moins deux tubes sensiblement rectilignes disposés de part et d'autre de ladite structure en forme de X, dont une première extrémité est solidarisée à l'un desdits rails tubulaires et dont l'autre extrémité est solidarisée à une zone centrale de ladite structure en forme de X.

2. Kart selon la revendication 1, comprenant un module de pédalier comprenant une poutre (5) sur laquelle est montée au moins une pédale,
**caractérisé en ce que** ladite poutre (5) est solidarisée audit châssis, d'une part audit élément tubulaire transverse reliant lesdits rails tubulaires au niveau de ladite partie avant du kart, et d'autre part à ladite zone centrale (50) de ladite structure en forme de X.

3. Kart selon la revendication 2, **caractérisé en ce qu'**il comprend au moins un élément amortissant formant pièce d'interface entre ledit châssis et ladite poutre (5) au niveau d'au moins un point de fixation de ladite poutre (5) audit châssis.

4. Kart selon l'un quelconque des revendications 1 à 3, comprenant également un module de direction (9) comprenant au moins un votant (6) et une colonne de direction (7), ledit module de direction (9) étant solidarisé audit châssis en au moins un point de fixation, **caractérisé en ce qu'**il comprend au moins un élément amortissants formant pièce d'interface entre ledit châssis et ledit module de direction (9) au niveau dudit au moins un point de fixation.

5. Kart selon l'une quelconque des revendications 1 à 4, comprenant également un siège solidarisé audit châssis en au moins un point de fixation,
**caractérisé en ce qu'**il comprend au moins un élément amortissant (402, 412) formant pièce d'interface entre ledit châssis et ledit siège au niveau dudit au moins un point de fixation.

6. Kart selon l'une quelconque des revendications 3 à 5, **caractérisé en ce que** ledit au moins un élément amortissant est un silentbloc (marque déposée).

7. Kart selon l'une quelconque des revendications 1 à 6, **caractérisé en ce que** ledit châssis comprend au moins un gousse (601) place entre deux desdits éléments tubulaires et/ou desdits rails tubulaires de façon à les assembler.

8. Kart selon la revendication 7, **caractérisé en ce que** ledit gousset (601) est soudé à chacun desdits éléments et/ou rails tubulaires qu'il assemble.

9. Kart selon l'une quelconque des revendications 7 et 8, **caractérisé en ce que** ledit gousset (601) comprend une portion sensiblement semi-cylindrique entourant l'un desdits éléments et/ou rails tubulaires qu'il assemble et au moins une aile de renfort (602) s'étendant entre lesdits éléments et/ou rails tubulaires.

10. Châssis pour kart comprenant une paire de rails tubulaire (51) sensiblement parallèles et s'étendant longitudinalement, reliés l'un à l'autre en chacune de leurs extrémités par au moins un élément tubulaire transverse,
**caractérisé en ce qu'**il comprend, au niveau d'une partie avant dudit kart, au moins deux tubes sensiblement en forme de U évasés en vis-à-vis (301, 321, 401, 421) assemblés en leur partie médiane de façon à former une structure en forme de X insérée entre lesdits rails tubulaires, et au moins deux tubes sensiblement rectilignes disposés de part et d'autre de ladite structure en forme de X, dont une première extrémité est solidarisée à l'un desdit rails tubulaires et dont l'autre extrémité est solidarisée à une zone centrale (50) de ladite structure en forme de X.

## Patentansprüche

1. Kart, das ein Chassis umfasst, das ein Paar röhrenförmiger Schienen (51) umfasst, die im Wesentlichen parallel sind und sich längs erstrecken, die miteinander an jedem ihrer Enden durch mindestens ein röhrenförmiges Querelement verbunden sind, **dadurch gekennzeichnet, dass** das Chassis im Bereich eines Vorderteils des Karts mindestens zwei Rohre im Wesentlichen mit aufgeweiteter U-Form in Gegenüberlage (301, 321, 401, 421) umfasst, die in ihrem mittleren Teil derart zusammengefügt sind, dass sie eine Struktur mit X-Form bilden, die zwischen die röhrenförmigen Schienen eingefügt ist, und mindestens zwei Rohre, die im Wesentlichen geradlinig sind, die zu beiden Seiten der Struktur in X-Form angeordnet sind, von welchen ein erstes Ende fest mit einer der röhrenförmigen Schienen verbunden ist, und das andere Ende fest mit einer zentralen Zone der Struktur in X-Form verbunden ist.

2. Kart nach Anspruch 1, das ein Tretlagermodul umfasst, das einen Balken (5) umfasst, auf den mindestens ein Pedal montiert ist, **dadurch gekennzeichnet, dass** der Balken (5) mit dem Chassis, einerseits mit dem röhrenförmigen Querelement, das die röhrenförmigen Schienen im Bereich des Vorderteils des Karts verbindet, und andererseits in der zentralen Zone (50) der Struktur in X-Form fest verbunden ist.

3. Kart nach Anspruch 2, **dadurch gekennzeichnet, dass** es mindestens ein Dämpfungselement umfasst, das ein Schnittstellenteil zwischen dem Chassis und dem Balken (5) im Bereich mindestens einer Befestigungsstelle des Balkens (5) an dem Chassis bildet.

4. Kart nach einem der Ansprüche 1 bis 3, das auch ein Lenkungsmodul (9) umfasst, das mindestens ein Lenkrad (6) und eine Lenksäule (7) umfasst, wobei das Lenkungsmodul (9) fest mit dem Chassis an mindestens einer Befestigungsstelle verbunden ist, **dadurch gekennzeichnet, dass** es mindestens ein Dämpfungselement umfasst, das ein Schnittstellenteil zwischen dem Chassis und dem Lenkungsmodul (9) im Bereich der mindestens einen Befestigungsstelle bildet.

5. Kart nach einem der Ansprüche 1 bis 4, das auch einen Sitz umfasst, der fest mit dem Chassis an mindestens einer Befestigungsstelle verbunden ist, **dadurch gekennzeichnet, dass** es mindestens ein Dämpfungselement (402, 412) umfasst, das ein Schnittstellenteil zwischen dem Chassis und dem Sitz im Bereich mindestens einer Befestigungsstelle bildet.

6. Kart nach einem der Ansprüche 3 bis 5, **dadurch gekennzeichnet, dass** das mindestens eine Dämpfungselement ein Silentbloc (eingetragenes Warenzeichen) ist.

7. Kart nach einem der Ansprüche 1 bis 6, **dadurch gekennzeichnet, dass** das Chassis mindestens ein Eckstück (601) umfasst, das zwischen zwei der röhrenförmigen Elemente und/oder der röhrenförmigen Schienen derart platziert ist, dass sie zusammengefügt sind.

8. Kart nach Anspruch 7, **dadurch gekennzeichnet, dass** das Eckstück (601) an jedes der röhrenförmigen Elemente und/oder jede der röhrenförmigen Schienen, die es zusammenfügt, geschweißt ist.

9. Kart nach einem der Ansprüche 7 und 8, **dadurch gekennzeichnet, dass** das Eckstück (601) einen im Wesentlichen halbzylindrischen Abschnitt umfasst, der eines der röhrenförmigen Elemente und/oder der röhrenförmigen Schienen, die er zusammenfügt, umfasst, und mindestens eine Verstärkungsrippe (602), die sich zwischen den röhrenförmigen Elementen und/oder Schienen erstreckt.

10. Chassis für Kart, das ein Paar röhrenförmiger Schienen (51), die im Wesentlichen parallel sind und sich längs erstrecken, umfasst, die aneinander an jedem ihren Enden durch mindestens ein röhrenförmiges Querelement verbunden sind, **dadurch gekennzeichnet, dass** es im Bereich eines Vorderteils des Karts mindestens zwei aufgeweitete Rohre im Wesentlichen mit U-Form in Gegenüberlage (301, 321, 401, 421) umfasst, die in ihrem mittleren Teil derart zusammengefügt sind, dass sie eine Struktur mit X-Form bilden, die zwischen die röhrenförmigen Schienen eingefügt ist, und mindestens zwei im Wesentlichen geradlinige Rohre, die zu beiden Seiten der Struktur in X-Form angeordnet sind, von welchen ein erstes Ende fest mit einer der röhrenförmigen Schienen verbunden ist, und von welchen das andere Ende fest mit einer zentralen Zone (50) der Struktur in X-Form verbunden ist.

## Claims

1. Kart comprising a chassis comprising a pair of tubular rails (51) substantially parallel to each other and extending longitudinally, connected to each other at each of their ends by at least one transverse tubular element, **characterized in that** said chassis comprises, at a front part of said kart, at least two tubes (301,321,401,421) appreciably having a flared-out U shape, facing each other and assembled at their median part so as to form an X-shaped structure inserted between said tubular rails and at least two appreciably rectilinear tubes disposed on either side of said X-shaped structure, one first end of which is fixedly attached to one of said tubular rails and the other end of which is fixedly attached to a central area of said X-shaped structure.

2. Kart according to claim 1, comprising a pedal unit module comprising a beam (5) on which there is mounted at least one pedal, **characterized in that** said beam (5) is fixedly attached to said chassis, on the one hand to said transverse tubular element connecting said tubular rails at said front part of the kart and on the other hand to said central area (50) of said X-shaped structure.

3. Kart according to claim 2, **characterized in that** it comprises at least one damping element forming an interface part between said chassis and said beam (5) at one point at least of attachment of said beam (5) to said chassis.

4. Kart according to any one of the claims 1 to 3, also comprising a steering module (9) comprising at least one steering wheel (6) and one steering column (7), said steering module (9) being fixedly attached to said chassis at one attachment point at least, **characterized in that** it comprises at least one damping element forming an interface part between said chassis and said steering module (9) at said at least one attachment point.

5. Kart according to any one of the claims 1 to 4, also comprising a seat fixedly attached to said chassis at one attachment point at least, **characterized in that** it comprises at least one damping element (402,412) forming an interface part between said chassis and said seat at said at least one attachment point.

6. Kart according to any one of the claims 3 to 5, **characterized in that** said at least one damping element is a Silent-block (registered mark).

7. Kart according to any one of the claims 1 to 6, **characterized in that** said chassis comprises at least one gusset (601) placed between two of said tubular elements and/or tubular rails forming the chassis, in such a way as to assemble them.

8. Kart according to claim 7, **characterized in that** said gusset (601) is welded to each of said tubular elements and/or rails that it assembles.

9. Kart according to any one of the claims 7 and 8, **characterized in that** said gusset (601) comprises a substantially semi-cylindrical portion surrounding one of said tubular elements and/or tubular rails that it assembles and at least one reinforcement wing (602) extending between said tubular elements and/or tubular rails.

10. Chassis for kart comprising a pair of tubular rails (51) substantially parallel to each other and extending longitudinally, connected to each other at each of their ends by at least one transverse tubular element,
**characterized in that** its comprises, at a front part of said kart, at least two tubes (301,321,401,421) appreciably having a substantially flared-out U shape, facing each other and assembled at their median part so as to form an X-shaped structure inserted between said tubular rails and at least two appreciably rectilinear tubes disposed on either side of said X-shaped structure, one first end of which is fixedly attached to one of said tubular rails and the other end of which is fixedly attached to a central area (50) of said X-shaped structure.
